# EUROPÄISCHE PATENTSCHRIFT

(11) **EP 4 570 486 B1**
(45) Veröffentlichungstag und Bekanntmachung des Hinweises auf die Patenterteilung: **09.12.2026**
(21) Anmeldenummer: 23216905.2
(22) Anmeldetag: 14.12.2023
(51) Int. Cl.: B29D 30/54, B60C 9/20

(54) **FAHRZEUGLUFTREIFEN**
PNEUMATIC TYRE FOR VEHICLES
PNEUMATIQUE POUR VÉHICULE

(43) Veröffentlichungstag der Anmeldung: 18.06.2025
(73) Patentinhaber: Continental Reifen Deutschland GmbH, 30175 Hannover (DE)
(72) Erfinder: Römer, Justus, 30173 Hannover (DE); Wies, Burkhard, 30173 Hannover (DE); Reese, Wolfgang, 30173 Hannover (DE); Günzler, Fabian, 30173 Hannover (DE); Karow, Malte, 30173 Hannover (DE); Marschler, Christian, 30173 Hannover (DE); Dehnert, Jörg, 30173 Hannover (DE)
(74) Vertreter: Continental Corporation

(56) Entgegenhaltungen:
- WO-A1-2023/090022
- JP-A- 2023 544 389

## Beschreibung

Die Erfindung betrifft einen Fahrzeugluftreifen für Personenkraftwagen und/oder leichte Nutzfahrzeuge, wobei der Reifen eine Gürtelbandage als auch eine Karkasse aufweist, welche jeweils unabhängig voneinander mindestens einen metallischen Festigkeitsträger aufweisen. Zudem betrifft die vorliegende Erfindung ein Trennverfahren, vorzugsweise zum Recyceln, solcher Reifen sowie ein Verfahren zur Herstellung eines erneuerten Fahrzeugluftreifens.

Aufgrund der Vielzahl weltweit eingesetzter Fahrzeugreifen ist die über die Zeit anfallende Menge von Altreifen ein wachsendes ökologisches Problem. Ein Verbrennen oder gar Vergraben bzw. Verklappen stellen berechtigterweise keine nachhaltigen Entsorgungsmethoden dar, zudem Altreifen selbst inzwischen als eine wertvolle Ressourcenquelle betrachtet werden.

Ein Recycling von Altreifen ist keineswegs unbekannt, kann aber nur mit hohem Aufwand betrieben werden und erzielt bisher kaum oder sogar keine vollständige Verwertung. Ein sehr bekanntes Verfahren ist die thermische Zersetzung, auch Pyrolyse genannt, um beispielsweise Pyrolyseruße und Pyrolyseöle zurückzugewinnen, die selbst wieder im Reifenherstellungsprozess eingesetzt werden. Eine weitestgehende Kreislaufwirtschaft ist aber auch in diesen Verfahren üblicherweise nicht gegeben.

Ein typischer Reifenaufbau stellt eine solche wünschenswerte Kreislaufwirtschaft vor drastische Herausforderungen. So ist beispielsweise bekannt, dass Geräuschabsorber, Klebstoffe für Geräuschabsorber sowie Dichtmittel ein großes Problem aufgrund ihrer verbliebenen Klebrigkeit bei fast jedem Trennverfahren darstellen. Doch selbst Altreifen, die keine solchen Geräuschabsorber, Klebstoffe und/oder Dichtmittel aufweisen oder davon bereits befreit wurden, stellen eine große Herausforderung für ein effizientes Trenn- bzw. Recyclingverfahren dar.

Beispielsweise enthält ein Altreifen, insbesondere für Personenkraftwagen und leichte Nutzfahrzeuge, neben Stahlcorden als Festigkeitsträger im Gürtel und in der Wulst, textile Festigkeitsträger in der Karkasse sowie in der Gürtelbandage, sofern eine Gürtelbandage verbaut ist. Üblicherweise sind alle Festigkeitsträger in einer umhüllenden Kautschukmischung (oft auch als Gummierungsmischung bezeichnet) eingebettet; häufig unter Zuhilfenahme von Haftvermittlern. Dies bewirkt, dass oft eine solide Verbindung zwischen Festigkeitsträger einerseits und Gummierungsmischung andererseits über die gesamte Lebensdauer eines Reifens erhalten bleibt. Üblicherweise ist der Verbund zwischen textilen Festigkeitsträgern und der umhüllenden Kautschukmischung signifikant stärker als zwischen Stahlcorden und ihrer Kautschukmischung. Dies hat zur Folge, dass ein nachträgliches Abtrennen textiler Festigkeitsträger von der umhüllenden Kautschukmischung nur sehr schwer (wenn überhaupt) möglich ist. Im Gegensatz dazu lassen sich Stahlcorde, d.h. metallische Festigkeitsträger, sehr viel einfacher von einer Kautschukmischung trennen.

Solche Konstruktionen sind allgemein bekannt. Beispielsweise offenbart WO 2023/090022 A1 einen Luftreifen, welcher eine erste und zweite Gürtellage mit jeweiligen Stahlcorden aufweist, geschützt von zwei radial außen darüberliegenden Verstärkungsschichten ("reinforcing layers"), die wiederum textile Festigkeitsträger umfassen.

Zudem sind Fahrzeugluftreifen mit Gürtelbandagen enthaltend textile Festigkeitsträger in ihrer Lebensdauer eingeschränkt, da eine Runderneuerung typischerweise nicht infrage kommt. Ein Abtrennen des abgefahrenen Laufstreifens und ein anschließendes Aufbringen eines neuen Laufstreifens scheitert häufig daran, dass beim mechanischen Abtrennen des abgefahrenen Laufstreifens die Gürtelbandage bzw. deren textile Festigkeitsträger Schaden nehmen. Dies macht den Reifen für eine Runderneuerung meist unbrauchbar, zumindest jedoch ungeeignet.

Es war somit die Aufgabe der vorliegenden Erfindung, diese Nachteile zu überwinden und insbesondere einen Fahrzeugluftreifen für Personenkraftwagen und/oder leichte Nutzfahrzeuge zur Verfügung zu stellen, der eine höhere Belastung erlaubt, eine erhöhte Lebensdauer erzielt, für eine Erneuerung geeigneter ist und schlussendlich besser wiederverwertet bzw. recycelt werden kann.

Diese Aufgabe wird gelöst durch den erfindungsgemäßen Fahrzeugluftreifen für Personenkraftwagen und/oder leichte Nutzfahrzeuge, umfassend einen Laufstreifen, eine Karkasse, einen Gürtel aus einer, zwei oder drei Gürtellagen, und eine Gürtelbandage aus einer oder mehr als einer Gürtelbandagenlage, wobei
- die Gürtelbandage radial außen den Gürtel bedeckt und zwischen Gürtel und Laufstreifen angeordnet ist, und
- die Karkasse, der Gürtel und die Gürtelbandage jeweils mindestens einen Festigkeitsträger aufweisen,
**dadurch gekennzeichnet, dass**
- der jeweils mindestens eine Festigkeitsträger in der Gürtelbandage und in der Karkasse unabhängig voneinander mindestens einen metallischen Festigkeitsträger aufweist, und
- der Fahrzeugluftreifen einen Traglastindex im Bereich von 71 bis 126 aufweist.

Die Erfinder der vorliegenden Erfindung haben herausgefunden, dass ein Einsatz metallischer Festigkeitsträger in den jeweiligen Bauteilen eines Fahrzeugluftreifens, insbesondere in der Karkasse und der Gürtelbandage, die vorstehend genannte Aufgabe löst.

Während der Lebensdauer weist ein solcher Fahrzeugluftreifen mit metallischen Festigkeitsträgern signifikante Vorteile auf. So ist die Stabilität, Steifigkeit und Widerstandsfähigkeit eines Reifens mit metallischen Festigkeitsträgern in der Karkasse und der Gürtelbandage typischerweise erhöht. Zudem weist ein entsprechend ausgerüsteter Fahrzeugluftreifen eine höhere Belastungsgrenze auf, beispielsweise in Form eines höheren Traglastindexes (auch Tragfähigkeitsindex oder Tragfähigkeitskennzahl genannt), verglichen mit Fahrzeugluftreifen gleicher Bauform und Größe aber mit textilen Festigkeitsträgern in Karkasse und Gürtelbandage. Dies wäre mit Blick auf schwerer werdende Elektrofahrzeuge zukünftig von Vorteil, da die Reifendimensionen nicht zwingend vergrößert werden müssten.

Weiterhin bietet der erfindungsgemäße Fahrzeugluftreifen Vorteile bei der Lebensdauer. Der Einsatz metallischer Festigkeitsträger sowohl in der Gürtelbandage als auch in der Karkasse senkt die Anfälligkeit von Beschädigungen beim Entfernen eines beispielsweise abgefahrenen Laufstreifens. Dies ermöglicht eine Runderneuerung eines entsprechenden Reifens durch ein Aufbringen eines neuen Laufstreifens, so dass die insgesamte Lebensdauer eines entsprechenden Reifens deutlich erhöht werden kann. Dies kann als bedeutender Start einer zumindest ansatzweisen Kreislaufwirtschaft betrachtet werden.

Ein erfindungsgemäßer Fahrzeugluftreifen bietet, nach Ablauf der Lebensdauer, weitere Vorteile, zum Beispiel beim Recycling. Ein Herauslösen von metallischen Festigkeitsträgern aus den einzelnen Reifenbauteilen ist deutlich einfacher realisierbar verglichen mit Reifenbauteilen, die textile Festigkeitsträger aufweisen. Insbesondere der Einsatz metallischer Festigkeitsträger in der Karkasse, dem Gürtel und der Gürtelbandage erlaubt es, einen wesentlichen Teil eines Reifens im Zuge eines entsprechenden Recyclingverfahrens vollständig von Festigkeitsträgern zu befreien. Der daraus resultierende Reifen kann anschließend beispielswiese einer Pyrolyse unterzogen werden, wobei die dabei entstehenden Pyrolyseprodukte nicht durch Zersetzungsrückstände textiler Festigkeitsträger beeinflusst bzw. kontaminiert werden. Weiterhin ist eine mechanische Zerkleinerung des von Festigkeitsträgern befreiten Reifens deutlich erleichtert.

Im Kontext der vorliegenden Erfindung bedeutet der Begriff "leichte Nutzfahrzeuge" Fahrzeuge, die typischerweise als Transporter bezeichnet werden (engl. "van size"). Typischerweise werden Fahrzeugluftreifen durch ihre Dimensionen, einen Traglastindex (entspricht einer Traglast in kg pro Reifen) und einen Geschwindigkeitsindex einer Fahrzeugklasse zugeordnet. Der Traglastindex des erfindungsgemäßen Fahrzeugluftreifens liegt generell im Bereich von 71 bis 126 und deckt dabei sowohl Personenkraftwagen als auch leichte Nutzfahrzeuge im Sinne der vorliegenden Erfindung ab. Dies entspricht typischerweise einer Traglast von 345 kg bis 1700 kg. Der erfindungsgemäße Fahrzeugluftreifen ist daher entweder ein Personenkraftwagenfahrzeugluftreifen oder ein Leicht-Nutzfahrzeugluftreifen. Im Kontext der vorliegenden Erfindung ist der Traglastindex auf einen Reifendruck von 2,5 bar für Einfachbereifung referenziert.

Speziell bevorzugt ist ein Fahrzeugluftreifen gemäß vorliegender Erfindung, wobei der Traglastindex im Bereich von 74 (375 kg) bis 114 (1180 kg) liegt, vorzugsweise von 77 (412 kg) bis 109 (1030 kg), weiter bevorzugt von 80 (450 kg) bis 107 (975 kg), am bevorzugtesten von 83 (487 kg) bis 104 (900 kg). Dies trifft vorzugsweise auf Fahrzeugluftreifen für Personenkraftwagen zu.

Ebenfalls speziell bevorzugt ist ein Fahrzeugluftreifen gemäß vorliegender Erfindung, wobei der Traglastindex im Bereich von 105 (925 kg) bis 126 (1700 kg) liegt, vorzugsweise von 110 (1060 kg) bis 124 (1600 kg), weiter bevorzugt von 115 (1215 kg) bis 122 (1500 kg), am bevorzugtesten von 116 (1250 kg) bis 120 (1400 kg). Dies trifft vorzugsweise auf Fahrzeugluftreifen für leichte Nutzfahrzeuge zu.

Vorzugsweise umfasst der erfindungsgemäße Fahrzeugluftreifen Reifen der Kategorie C1 und/oder C2 gemäß der Klassifizierung von Reifen basierend auf der Verordnung (EG) Nr. 661/2009 des europäischen Parlaments und des Rates vom 13. Juli 2009. Dementsprechend ist der erfindungsgemäße Fahrzeugluftreifen vorzugsweise kein Reifen der Kategorie C3.

In einigen Fällen ist ein erfindungsgemäßer Fahrzeugluftreifen bevorzugt, wobei der Traglastindex einen Wert von 121 nicht übersteigt.

Der erfindungsgemäße Fahrzeugluftreifen ist kein Fahrradreifen und kein Motorradreifen, vorzugsweise kein Zweiradreifen.

Der erfindungsgemäße Fahrzeugluftreifen ist kein Truckreifen und kein Schwerlastreifen.

Der erfindungsgemäße Fahrzeugluftreifen weist einen Gürtel aus einer, zwei oder drei Gürtellagen auf. In einigen Fällen unterscheiden sich Fahrzeugluftreifen für Personenkraftwagen und leichte Nutzfahrzeuge vorzugsweise in der Anzahl der Gürtellagen. In anderen Fällen ist die Anzahl der Gürtellagen identisch. In einigen Fällen ist ein erfindungsgemäßer Fahrzeugluftreifen bevorzugt, wobei der Gürtel eine einzelne Gürtellage aufweist. Im Gegensatz dazu ist ein erfindungsgemäßer Fahrzeugluftreifen in anderen Fällen bevorzugt, wobei der Gürtel zwei oder drei Gürtellagen aufweist, besonders bevorzugt zwei Gürtellagen. Dies ist besonders bevorzugt bei Personenkraftwagen und/oder leichten Nutzfahrzeugen der Fall.

Typischerweise weist der Gürtel Gürtelkanten auf. Dies Gürtelkanten (oft auch als Gürtelränder bezeichnet) werden vorzugsweise besonders geschützt, indem sie über- bzw. abgedeckt werden. Dies minimiert ungewollte Bewegungen der Gürtelkanten bzw. der darin enthaltenen Festigkeitsträger innerhalb des Reifens, die anderenfalls zu inneren Schäden bzw. Materialschwächungen führen würden.

Weiterhin weist der erfindungsgemäße Fahrzeugluftreifen eine Gürtelbandage aus einer oder mehr als einer Gürtelbandagenlage auf. Es ist durchaus bekannt, eine Gürtelbandage in Fahrzeugluftreifen anzuordnen. Die Gürtelbandage dient insbesondere bei vergleichsweise hohen Geschwindigkeiten dazu, eine Erhebung des Reifens durch die im Fahrbetrieb auftretenden Fliehkräfte zu begrenzen. Vorzugsweise sollen Festigkeitsträger in der Gürtelbandage den Gürtel, insbesondere die Gürtelkanten für die Schnelllauffestigkeit und Dauerhaltbarkeit niederhalten. Vorzugsweise deckt die Gürtelbandage im erfindungsgemäßen Fahrzeugluftreifen daher die Gürtelkanten ab. Mit anderen Worten, bevorzugt ist ein erfindungsgemäßer Fahrzeugluftreifen, wobei die Gürtelbandage in axialer Ausrichtung eine längere Ausdehnung aufweist als der Gürtel (d.h. breiter ist).

Weist die Gürtelbandage im erfindungsgemäßen Fahrzeugluftreifen eine einzelne Gürtelbandagenlage auf, bildet diese Gürtelbandagenlage die gesamte Gürtelbandage. Weist die Gürtelbandage hingegen mehr als eine Gürtelbandagenlage auf, bildet die Gesamtheit aller Gürtelbandagenlagen die Gürtelbandage. Der mindestens eine metallische Festigkeitsträger in der Gürtelbandange befindet sich in einer der Gürtelbandagenlage bzw. der mindestens eine metallische Festigkeitsträger bildet diese vorzugsweise aus. Besonders bevorzugt weist jede der Gürtelbandagenlagen unabhängig voneinander mindestens einen metallischen Festigkeitsträger auf. Die metallischen Festigkeitsträger sind somit identisch oder verschieden, wenn die Gürtelbandage in Form von zwei oder mehr Gürtelbandagenlagen ausgeführt ist. Entsprechendes gilt vorzugsweise auch für die Karkasse und den Gürtel.

Bevorzugt ist ein erfindungsgemäßer Fahrzeugluftreifen, wobei der mindestens eine Festigkeitsträger in der Gürtelbandage gewickelt oder gespult ist. Besonders bevorzugt ist ein erfindungsgemäßer Fahrzeugluftreifen, wobei der mindestens eine metallische Festigkeitsträger in der Gürtelbandage ganz oder teilweise (vorzugsweise ganz) gespult und/oder aufgelegt ist, vorzugsweise alle Festigkeitsträger in der Gürtelbandage. Der mindestens eine metallische Festigkeitsträger (vorzugsweise aus Stahl) in der Gürtelbandage wird vorzugsweise in einer umhüllenden Kautschukmischung im erfindungsgemäßen Fahrzeugluftreifen verbaut, wobei diese Kautschukmischung wiederum einen festen Verbund mit anderen Kautschukmischungen im Reifen (z. B. im darunterliegenden Gürtel oder im darüber angeordneten Laufstreifen) eingehen. In manchen Fällen ist es hingegen bevorzugt, dass der mindestens eine metallische Festigkeitsträger (vorzugsweise aus Stahl) in der Gürtelbandage ungummiert oder nur teilgummiert eingearbeitet wird, wobei ein direkter Kontakt zwischen ungummierten bzw. teilweise gummierten metallischen Festigkeitsträgern zweier Lagen vorzugsweise vermieden wird, da dies üblicherweise zu unerwünschten Frettingeffekten führt. Vorzugsweise weisen der darunterliegende Gürtel und/oder der darüber angeordnete Laufstreifen eine Haftmischung auf, um einen ausreichenden Festigkeitsverbund zu dem umgummierten bzw. teilweise gummierten metallischen Festigkeitsträger in der Gürtelbandage herzustellen.

Im Kontext der vorliegenden Erfindung umfasst der Begriff "Gürtelbandagenlage" solche Lagen, die in axialer Richtung eine ununterbrochene (d.h. durchgängige) Lage bilden. Beispielsweise ist im Sinne der vorliegenden Erfindung eine mittels eines Monofilaments mit Vorschub entlang der axialen Richtung durchgängig gespulte Gürtelbandagenlage eine ununterbrochene (d.h. durchgängige) Gürtelbandagenlage. Dies ist typischerweise der bevorzugteste Fall.

Der Begriff umfasst aber auch den weniger bevorzugten Fall, dass eine Gürtelbandagenlage unterbrochen vorliegt, d.h. beispielsweise aus voneinander separierten, sich nicht berührenden Teillagen bzw. Streifen besteht bzw. mit Unterbrechung(en) gespult wird. Wird beispielsweise ein Monofilament stattdessen nur im Bereich der Gürtelkanten (auch als Seitenabschnitt bezeichnet) aufgespult, wobei in der Mitte (der sogenannte Mittenabschnitt einer Lage) über eine gewisse Breite kein Festigkeitsträger aufgebracht ist (d.h. stellenweise ist keine Gürtelbandagenlage ausgeprägt), handelt es sich um eine unterbrochene Lage (beispielsweise erreicht durch gap spooling). Sofern mehr als eine Gürtelbandagenlage vorliegt, umfasst der Begriff auch solche Ausgestaltungen, wobei ununterbrochene und unterbrochene Lagen kombiniert vorliegen. Beispielsweise liegt eine erste Lage ununterbrochen (d.h. durchgängig) vor und eine zweite Lage unterbrochen, usw. Sofern Streifen zum Ausbilden einer Gürtelbandagenlage eingesetzt werden, weisen diese vorzugsweise eine Breite von 2 bis 15 mm auf, vorzugsweise von 2,5 bis 10 mm, besonders bevorzugt von 3 bis 5 mm. In alternativen Fällen ist eine Breite von 5 bis 15 mm bevorzugt, besonders bevorzugt von 8 bis 12 mm, ganz besonders bevorzugt von 9 bis 11 mm. Solche Streifen weisen vorzugsweise mehrere (vorzugsweise parallel) nebeneinander angeordnete metallische Festigkeitsträger auf, vorzugsweise in Form von metallischen Monofilamenten und/oder metallischen Corden. Vorzugsweise liegt die Anzahl dieser nebeneinander angeordneten metallischen Festigkeitsträger im Bereich von 2 bis 10, vorzugsweise 2 bis 5.

In manchen Fällen ist ein Fahrzeugluftreifen bevorzugt, wobei die Gürtelbandage oder einzelne Gürtelbandagenlagen in einem Stück als Vollbandage aufgelegt werden.

Vorzugsweise umfasst der Begriff "Gürtelbandagenlage" außerdem einen in axialer Richtung gleichmäßigen Aufbau als auch einen ungleichmäßigen Aufbau (z.B. unterschiedliche Ausgestaltungen des mindestens einen Festigkeitsträgers in der Mitte verglichen mit den Kanten). Dies umfasst beispielsweise Ausgestaltungen, wobei im Bereich der Gürtelkanten in den Seitenabschnitten ein erster Festigkeitsträger aufgespult wird, wobei im Mittenabschnitt ein vom ersten Festigkeitsträger verschiedener, zweiter Festigkeitsträger eingesetzt wird. Dies entspräche einem ungleichmäßigen Aufbau. Im Gegensatz dazu entspräche beispielsweise ein durchgängig, mit Vorschub entlang der axialen Richtung gespultes Monofilament einem gleichmäßigen Aufbau.

Bevorzugt ist ein erfindungsgemäßer Fahrzeugluftreifen, wobei der mindestens eine metallische Festigkeitsträger in der Gürtelbandage ein oder mehr als ein metallisches Monofilament und/oder einen oder mehr als einen metallischen Cord aufweist, vorzugsweise jeweils aus Stahl. Besonders bevorzugt ist ein oder mehr als ein metallischer Cord, vorzugsweise ein oder mehr als ein Stahlcord.

Im Kontext der vorliegenden Erfindung bedeutet das Merkmal "aus Stahl", dass ein entsprechender metallischer Festigkeitsträger im Wesentlichen aus Stahl besteht, wobei ein geringer Anteil eines typischerweise nicht als Stahl bezeichneten Metalls/Metalllegierung nicht ausgeschlossen ist. Beispielsweise ist ein mit einer Messingbeschichtung versehener Stahl von diesem Merkmal umfasst. Vorzugsweise umfasst ein metallischer Festigkeitsträger aus Stahl 90 Gewichtsprozent Stahl oder mehr, bezogen auf die Gesamtmasse des metallischen Festigkeitsträgers, vorzugsweise 92 Gewichtsprozent oder mehr, besonders bevorzugt 95 Gewichtsprozent oder mehr, ganz besonders bevorzugt 97 Gewichtsprozent oder mehr, am bevorzugtesten 99 Gewichtsprozent oder mehr.

Im Kontext der vorliegenden Erfindung bedeutet der Begriff "Monofilament" ein einzelner metallischer Draht. Der Begriff "Cord" bedeutet ein Verbund aus mindestens zwei Filamenten, die vorzugsweise miteinander verdreht sind. Die bevorzugte Verdrehung kann unterschiedlich ausgestaltet sein. Hinsichtlich der Cordausgestaltung gibt es keine spezifische Einschränkung im Kontext der vorliegenden Erfindung. Vorzugsweise umfasst der mindestens eine metallische Cord solche Corde, beginnend bei offenen Corden bis hin zu kompakten Corden.

Besonders bevorzugt ist ein erfindungsgemäßer Fahrzeugluftreifen, wobei die Gürtelbandage ausschließlich metallische Festigkeitsträger aufweist, vorzugsweise ausschließlich metallische Monofilamente und/oder metallische Corde, besonders bevorzugt jeweils ausschließlich aus Stahl. Dies ist besonders bevorzugt, da es eine deutlich vereinfachte Recyclingfähigkeit bedeutet, da ausschließlich metallische bzw. Stahlfestigkeitsträger entfernt werden müssen. Typischerweise lassen sich diese am einfachsten von einer umhüllenden Kautschuckmischung isolieren.

Besonders bevorzugt ist ein erfindungsgemäßer Fahrzeugluftreifen, wobei die Gürtelbandage überwiegend frei ist von, vorzugsweise nicht aufweisend, textile Festigkeitsträger. Dem Fachmann ist klar, ob ein textiles Element als Festigkeitsträger angesehen wird oder nicht. Im Sinne der vorliegenden Erfindung sind beispielsweise textile Fäden bzw. Filamente, die typischerweise zur klassischen Verteilung und/oder Ableitung elektrischer Spannungen dienen, keine Festigkeitsträger im Sinne der vorliegenden Erfindung. Dies gilt gleichermaßen für übliche textile Fäden bzw. Filamente zur Luftabführung sowie andere textile Hilfsmittel. Dies gilt besonders bevorzugt immer dann, wenn solche textilen Hilfsmittel nicht explizit mit einer als Festigkeitsträger bezeichneten Funktion benannt sind. Mit anderen Worten, bevorzugt ist ein erfindungsgemäßer Fahrzeugluftreifen, wobei der mindestens eine metallische Festigkeitsträger in der Gürtelbandage der einzige Festigkeitsträger ist.

Der mindestens eine metallische Festigkeitsträger in der Gürtelbandage ist im Wesentlichen in Umfangsrichtung angeordnet bzw. verlaufend. Bevorzugt ist ein erfindungsgemäßer Fahrzeugluftreifen, wobei der mindestens eine metallische Festigkeitsträger in der Gürtelbandage in Umfangsrichtung in einem Winkel in einem Bereich von 0 bis 5° verläuft, bezogen auf die exakte Umfangsrichtung, vorzugsweise von 0 bis 4°, besonders bevorzugt von 0 bis 3°, ganz besonders bevorzugt von 0 bis 2°. Die vorstehend genannten Winkel beziehen sich auf den Betrag um den der Winkel von der exakten Umfangrichtung vorzugsweise abweichen kann. Weiter vorzugsweise verläuft der mindestens eine metallische Festigkeitsträger in der Gürtelbandage weitestgehend parallel zueinander.

Vorzugsweise weist der mindestens eine metallische Festigkeitsträger in der Gürtelbandage ein Dehnungsverhalten auf, welches vom Dehnungsverhalten des mindestens einen metallischen Festigkeitsträgers in der Karkasse verschieden ist, vorzugsweise weist der mindestens eine metallische Festigkeitsträger in der Gürtelbandage eine höhere Dehnungsfähigkeit auf. Besonders bevorzugt ist der mindestens eine metallische Festigkeitsträger in der Gürtelbandage ein high elongation cord.

Vorzugsweise weist der mindestens eine metallische Festigkeitsträger in der Gürtelbandage einen Haftvermittler auf. Dies bewirkt typischerweise eine verstärkte Haftung zwischen dem Festigkeitsträger und der umhüllenden Kautschukmischung. Dies gilt vorzugsweise ebenfalls für den mindestens einen Festigkeitsträger in der Karkasse und dem Gürtel. Vorzugsweise ist der Haftvermittler eine Legierung, besonders bevorzugt eine Kupfer- oder Zinklegierung, am bevorzugtesten eine Messinglegierung.

Bevorzugt ist ein erfindungsgemäßer Fahrzeugluftreifen, wobei die Gürtelbandage das radial außen letzte Bauteil ist, welches mindestens einen metallischen Festigkeitsträger aufweist, vorzugsweise überhaupt einen Festigkeitsträger aufweist. Zudem ist die Gürtelbandage radial außen vorzugsweise direkt vom Laufstreifen bedeckt.

Der erfindungsgemäße Fahrzeugluftreifen weist zudem eine Karkasse auf, vorzugsweise aufweisend eine oder mehr als eine Karkasslage. Besonders bevorzugt sind eine einzelne oder zwei Karkasslagen, vorzugsweise eine einzelne Karkasslage.

In einigen Fällen ist ein erfindungsgemäßer Fahrzeugluftreifen bevorzugt, wobei die Karkasse in radialer Bauart ausgeführt ist. In anderen Fällen ist es bevorzugt, wobei die Karkasse in diagonaler Bauart ausgeführt ist. Besonders bevorzugt ist die radiale Bauart.

Bevorzugt ist ein erfindungsgemäßer Fahrzeugluftreifen, wobei der mindestens eine metallische Festigkeitsträger in der Karkasse ein oder mehr als ein metallisches Monofilament und/oder einen oder mehr als einen metallischen Cord aufweist, vorzugsweise jeweils aus Stahl.

Besonders bevorzugt ist ein erfindungsgemäßer Fahrzeugluftreifen, wobei die Karkasse ausschließlich metallische Festigkeitsträger aufweist, vorzugsweise ausschließlich metallische Monofilamente und/oder metallische Corde, besonders bevorzugt jeweils ausschließlich aus Stahl.

Besonders bevorzugt ist ein erfindungsgemäßer Fahrzeugluftreifen, wobei die Karkasse überwiegend frei ist von, vorzugsweise nicht aufweisend, textile Festigkeitsträger. Das oben Gesagte zu ggf. textilen Fäden bzw. Filamenten als Hilfsmittel gilt vorzugsweise auch für die Karkasse.

Der erfindungsgemäße Fahrzeugluftreifen weist zudem einen Gürtel aus einer, zwei oder drei Gürtellagen auf. Der Gürtel ist zwischen Karkasse und Gürtelbandage angeordnet, wobei die Karkasse den Gürtel radial in innenliegender Richtung begrenzt und die Gürtelbandage den Gürtel radial nach außen gerichtet begrenzt. Speziell bevorzugt ist ein erfindungsgemäßer Fahrzeugluftreifen, wobei der Gürtel eine einzelne oder zwei Gürtellagen aufweist. Dies trifft vorzugsweise auf Fahrzeugluftreifen für Personenkraftwagen zu.

Ebenfalls speziell bevorzugt ist ein erfindungsgemäßer Fahrzeugluftreifen, wobei der Gürtel zwei oder drei Gürtellagen aufweist. Dies trifft vorzugsweise auf Fahrzeugluftreifen für leichte Nutzfahrzeuge zu.

Bevorzugt ist ein erfindungsgemäßer Fahrzeugluftreifen, wobei der mindestens eine Festigkeitsträger in dem Gürtel mindestens einen metallischen Festigkeitsträger aufweist, wobei dieser vorzugsweise ein oder mehr als ein metallisches Monofilament und/oder einen oder mehr als einen metallischen Cord aufweist, besonders bevorzugt jeweils aus Stahl.

Besonders bevorzugt ist ein erfindungsgemäßer Fahrzeugluftreifen, wobei der Gürtel ausschließlich metallische Festigkeitsträger aufweist, vorzugsweise ausschließlich metallische Monofilamente und/oder metallische Corde, besonders bevorzugt jeweils ausschließlich aus Stahl.

In manchen Fällen ist ein erfindungsgemäßer Fahrzeugluftreifen bevorzugt, wobei der Gürtel keinen metallischen Festigkeitsträger aufweist, der in Umfangsrichtung in einem Winkel in einem Bereich von 0 bis 5° verläuft, vorzugsweise überhaupt keinen Festigkeitsträger aufweist, der in Umfangsrichtung in einem Winkel in einem Bereich von 0 bis 5° verläuft. Sofern der Gürtel mindestens einen Festigkeitsträger, vorzugsweise einen metallischen, aufweist, der in Umfangsrichtung in einem Winkel in einem Bereich von 0 bis 5° verläuft, so weist der erfindungsgemäße Fahrzeugluftreifen vorzugsweise auch in der Gürtelbandage mindestens einen metallischen Festigkeitsträger auf, der in Umfangsrichtung in einem Winkel in einem Bereich von 0 bis 5° verläuft. Dem Fachmann ist darüber hinaus klar, dass ein Gürtel bzw. eine Gürtellage mit einem Festigkeitsträger, der in Umfangsrichtung in einem Winkel in einem Bereich von 0 bis 5° verläuft, keine Gürtelbandage bzw. Gürtelbandagenlage im Sinne der vorliegenden Erfindung ist.

Die vorliegende Erfindung betrifft zudem ein Trennverfahren von Fahrzeugluftreifen umfassend die Schritte
(a) Bereitstellen eines erfindungsgemäßen Fahrzeugluftreifens, vorzugsweise wie vorstehend als bevorzugt definiert,
(b) optional zumindest teilweises Entfernen von Seitenwand-, Schulter- und/oder Wulstbereichen, so dass ein Restreifen resultiert, und
(c) Heraustrennen der metallischen Festigkeitsträger aus dem bereitgestellten Fahrzeugluftreifen gemäß Schritt (a) oder dem Restreifen gemäß Schritt (b).

Der erfindungsgemäße Fahrzeugluftreifen, vorzugsweise wie vorstehend als bevorzugt definiert, eignet sich besonders gut für das erfindungsgemäße Trennverfahren. Das vorstehend Gesagte zum erfindungsgemäßen Fahrzeugluftreifen gilt vorzugsweise *mutatis mutandis* auch für das erfindungsgemäße Trennverfahren.

Bevorzugt ist ein erfindungsgemäßes Trennverfahren, wobei der Schritt (b) entweder vor oder nach Schritt (c) durchgeführt wird, vorzugsweise vor Schritt (c). In einigen Fällen ist es bevorzugt, dass die Schritte (b) und (c) jeweils unabhängig voneinander wiederholend durchgeführt werden bis ein gemäß Schritt (a) bereitgestellter Fahrzeugluftreifen vollständig aufgetrennt wurde.

Vorzugsweise ist das erfindungsgemäße Trennverfahren Bestandteil eines Recyclingverfahrens, d.h. das erfindungsgemäße Trennverfahren ist vorzugsweise ein Recyclingverfahren.

Als Ergebnis des Schrittes (c) resultieren mindestens herausgetrennte metallische Festigkeitsträger, vorzugsweise sämtliche metallischen Festigkeitsträger. Vorzugsweise resultiert auch ein von metallischen Festigkeitsträgern befreiter zerkleinerter Restreifen oder ein von metallischen Festigkeitsträgern befreiter, gemäß Schritt (a) bereitgestellter, Fahrzeugluftreifen. Daher umfasst das erfindungsgemäße Trennverfahren vorzugsweise den zusätzlichen Schritt
(d) Zerkleinern zu Zerkleinerungsprodukten des aus Schritt (c) erhaltenen, von metallischen Festigkeitsträgern befreiten Restreifens gemäß Schritt (b) oder des gemäß Schritt (a) bereitgestellten, von metallischen Festigkeitsträgern befreiten Fahrzeugluftreifens.

Die so erhaltenen Zerkleinerungsprodukte werden vorzugsweise in unmittelbar folgenden Verfahrensschritten oder in nachgelagerten Verfahren weiter verarbeitet.

Die vorliegende Erfindung betrifft zudem ein Verfahren zur Herstellung eines erneuerten Fahrzeugluftreifens umfassend die Schritte
(A) Bereitstellen eines erfindungsgemäßen Fahrzeugluftreifens, vorzugsweise wie vorstehend als bevorzugt definiert,
(B) vollständiges oder teilweises Abtrennen des Laufstreifens, vorzugsweise eines abgefahrenen Laufstreifens, und
(C) Aufbringen eines neuen Laufstreifens, so dass der erneuerte Fahrzeugluftreifen resultiert.

Der erfindungsgemäße Fahrzeugluftreifen, vorzugsweise wie vorstehend als bevorzugt definiert, eignet sich besonders gut für das erfindungsgemäße Verfahren zur Herstellung eines erneuerten Fahrzeugluftreifens (auch Erneuerung oder Runderneuerung genannt). Das vorstehend Gesagte zum erfindungsgemäßen Fahrzeugluftreifen gilt vorzugsweise *mutatis mutandis* auch für das erfindungsgemäße Verfahren zur Herstellung des erneuerten Fahrzeugluftreifens.

Wie bereits oben im Text ausgeführt, begünstigt die Verwendung von metallischen Festigkeitsträgern in der Karkasse und in der Gürtelbandage eine Erneuerung eines z.B. bereits abgefahrenen Reifens, da das Aufbringen eines neuen Laufstreifens ohne größere Beschädigungen an den darunter liegenden Reifenbauteilen erfolgen kann.

Bevorzugt weist der erfindungsgemäße Fahrzeugluftreifen im Laufstreifen eine Cap und eine Base auf, die zusammen den Laufstreifen bilden. Besonders bevorzugt wird im erfindungsgemäßen Verfahren zur Erneuerung in Schritt (B) die Cap oder sowohl die Cap als auch die Base abgetrennt.

Vorzugsweise ist der Laufstreifen im erfindungsgemäßen Fahrzeugluftreifen profiliert, d.h. er weist ein Profil mit einer Profiltiefe auf. Besonders bevorzugt ist ein erfindungsgemäßes Verfahren zur Erneuerung, wobei der in Schritt (A) bereitgestellte Fahrzeugluftreifen einen Laufstreifen mit einer nicht mehr zulässigen Profiltiefe aufweist.

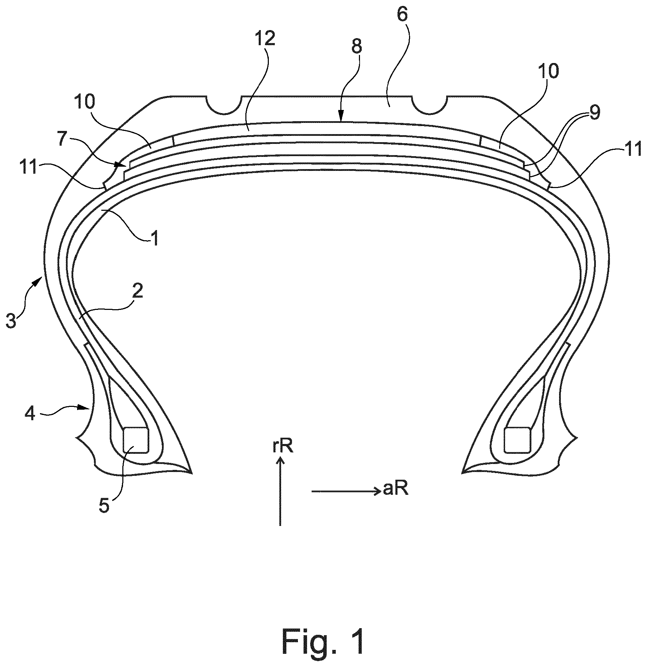

Weitere Merkmale, Vorteile und Einzelheiten der Erfindung werden nun anhand der schematischen Zeichnung gemäß Fig. 1, die Ausführungsbeispiele darstellen, näher erläutert. Fig. 1 zeigt einen radialen Querschnitt durch einen erfindungsgemäßen Fahrzeugluftreifen. Die wesentlichen Bauteile, aus welchen sich der dargestellte Fahrzeugluftreifen zusammensetzt, sind
- eine weitgehend luftundurchlässige Innenschicht 1;
- eine Karkasse 2, die beispielhaft in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist;
- einen radial außerhalb der Karkasse befindlichen profilierten Laufstreifen 6;
- einen zwischen dem Laufstreifen 6 und der Karkasse 2 angeordneten Gürtel 7 (radial außen von der Gürtelbandage 8 abgedeckt), ausgebildet mit zwei Gürtellagen der denkbaren einen, zwei oder drei Gürtellagen; und
- eine den Gürtel 7 bedeckende Gürtelbandage 8, ausgebildet mit einer Gürtelbandagenlage der denkbaren einen oder mehr als einen Gürtelbandagenlage.

Die Gürtelbandage 8 deckt die Gürtelkanten 9 ab und beinhaltet metallische Festigkeitsträger, die parallel in Umfangsrichtung des Fahrzeugluftreifens entlang der axialen Breite vorzugsweise gewickelt sind. Ebenso weisen die Karkasse 2 und der Gürtel 7 jeweils mindestens einen metallischen Festigkeitsträger auf, besonders bevorzugt aus Stahl.

In dieser gezeigten schematischen Darstellung umfasst die Gürtelbandage 8 in ihrer axialen Ausdehnung zwei Seitenabschnitte 10, welche jeweils eine axiale Kante 11 der Gürtelbandage 8 ausbilden, sowie einen zwischen den beiden Seitenabschnitten 10 angeordneten Mittenabschnitt 12, wobei diese Abschnitte zusammen die einzelne Gürtelbandagenlage bilden. Jeder der beiden Seitenabschnitt 10 deckt auf seiner axialen Seite des Reifens vorzugsweise zumindest die Gürtelkante 9 ab. In dieser Ausführung liegt in axialer Richtung somit ein ungleichmäßiger Aufbau vor, da sich der Mittenabschnitt von den Seitenabschnitten typischerweise unterscheidet. In einer nicht gezeigten schematischen Darstellung ist die Ausbildung der Gürtelbandage in axialer Richtung alternativ gleichmäßig aufgebaut, d.h. die Gürtelbandagenlage unterscheidet nicht zwischen einem strukturell verschiedenen Mittenabschnitt und Seitenabschnitten. Vielmehr ist die Gürtelbandagenlage gleichmäßig und einheitlich ausgeführt, wobei vorzugsweise weiterhin die Gürtelkanten abgedeckt sind.

### Bezugszeichenliste

### (Teil der Beschreibung)

1 Innenschicht
2 Karkasse
3 Seitenwand
4 Wulstbereich
5 Wulstkern
6 Laufstreifen
7 Gürtel
8 Gürtelbandage
9 Gürtelkante
10 Seitenabschnitt
11 axiale Kanten der Gürtelbandage
12 Mittenabschnitt
aR axiale Richtung
rR radiale Richtung

## Patentansprüche

1. Fahrzeugluftreifen für Personenkraftwagen und/oder leichte Nutzfahrzeuge, umfassend einen Laufstreifen (6), eine Karkasse (2), einen Gürtel (7) aus einer, zwei oder drei Gürtellagen, und eine Gürtelbandage (8) aus einer oder mehr als einer Gürtelbandagenlage, wobei
- die Gürtelbandage (8) radial außen den Gürtel (7) bedeckt und zwischen Gürtel (7) und Laufstreifen (6) angeordnet ist, und
- die Karkasse (2), der Gürtel (7) und die Gürtelbandage (8) jeweils mindestens einen Festigkeitsträger aufweisen,
**dadurch gekennzeichnet, dass**
- der jeweils mindestens eine Festigkeitsträger in der Gürtelbandage (8) und in der Karkasse (2) unabhängig voneinander mindestens einen metallischen Festigkeitsträger aufweist, und
- der Fahrzeugluftreifen einen Traglastindex im Bereich von 71 bis 126 aufweist.

2. Fahrzeugluftreifen nach Anspruch 1, wobei der mindestens eine metallische Festigkeitsträger in der Gürtelbandage (8) ein oder mehr als ein metallisches Monofilament und/oder einen oder mehr als einen metallischen Cord aufweist, vorzugsweise jeweils aus Stahl.

3. Fahrzeugluftreifen nach Anspruch 1 oder 2, wobei die Gürtelbandage (8) ausschließlich metallische Festigkeitsträger aufweist, vorzugsweise ausschließlich metallische Monofilamente und/oder metallische Corde, besonders bevorzugt jeweils ausschließlich aus Stahl.

4. Fahrzeugluftreifen nach einem der Ansprüche 1 bis 3, wobei der mindestens eine metallische Festigkeitsträger in der Karkasse (2) ein oder mehr als ein metallisches Monofilament und/oder einen oder mehr als einen metallischen Cord aufweist, vorzugsweise jeweils aus Stahl.

5. Fahrzeugluftreifen nach einem der Ansprüche 1 bis 4, wobei die Karkasse (2) ausschließlich metallische Festigkeitsträger aufweist, vorzugsweise ausschließlich metallische Monofilamente und/oder metallische Corde, besonders bevorzugt jeweils ausschließlich aus Stahl.

6. Fahrzeugluftreifen nach einem der Ansprüche 1 bis 5, wobei der mindestens eine Festigkeitsträger in dem Gürtel (7) mindestens einen metallischen Festigkeitsträger aufweist, wobei dieser vorzugsweise ein oder mehr als ein metallisches Monofilament und/oder einen oder mehr als einen metallischen Cord aufweist, besonders bevorzugt jeweils aus Stahl.

7. Fahrzeugluftreifen nach Anspruch 6, wobei der Gürtel (7) ausschließlich metallische Festigkeitsträger aufweist, vorzugsweise ausschließlich metallische Monofilamente und/oder metallische Corde, besonders bevorzugt jeweils ausschließlich aus Stahl.

8. Fahrzeugluftreifen nach einem der Ansprüche 1 bis 7, wobei der mindestens eine metallische Festigkeitsträger in der Gürtelbandage (8) ganz oder teilweise gespult und/oder aufgelegt ist, vorzugsweise alle Festigkeitsträger in der Gürtelbandage (8).

9. Fahrzeugluftreifen nach einem der Ansprüche 1 bis 8, wobei der mindestens eine metallische Festigkeitsträger in der Gürtelbandage (8) in Umfangsrichtung in einem Winkel in einem Bereich von 0 bis 5° verläuft, bezogen auf die exakte Umfangsrichtung, vorzugsweise von 0 bis 4°, besonders bevorzugt von 0 bis 3°, ganz besonders bevorzugt von 0 bis 2°.

10. Fahrzeugluftreifen nach einem der Ansprüche 1 bis 9, wobei die Gürtelbandage (8) überwiegend frei ist von, vorzugsweise nicht aufweisend, textile Festigkeitsträger.

11. Fahrzeugluftreifen nach einem der Ansprüche 1 bis 10, wobei die Karkasse (2) überwiegend frei ist von, vorzugsweise nicht aufweisend, textile Festigkeitsträger.

12. Trennverfahren von Fahrzeugluftreifen umfassend die Schritte
(a) Bereitstellen eines Fahrzeugluftreifens nach einem der Ansprüche 1 bis 11,
(b) optional zumindest teilweises Entfernen von Seitenwand-, Schulter- und/oder Wulstbereichen, so dass ein Restreifen resultiert, und
(c) Heraustrennen der metallischen Festigkeitsträger aus dem bereitgestellten Fahrzeugluftreifen gemäß Schritt (a) oder dem Restreifen gemäß Schritt (b).

13. Verfahren zur Herstellung eines erneuerten Fahrzeugluftreifens umfassend die Schritte
(A) Bereitstellen eines Fahrzeugluftreifens nach einem der Ansprüche 1 bis 11,
(B) vollständiges oder teilweises Abtrennen des Laufstreifens, vorzugsweise eines abgefahrenen Laufstreifens, und
(C) Aufbringen eines neuen Laufstreifens, so dass der erneuerte Fahrzeugluftreifen resultiert.

## Claims

1. Pneumatic vehicle tyre for passenger motor vehicles and/or light commercial vehicles, comprising a tread (6), a carcass (2), a belt (7) composed of one, two or three belt plies, and a belt bandage (8) composed of one or more than one belt bandage ply, wherein
- the belt bandage (8) covers the belt (7) radially on the outside and is arranged between the belt (7) and the tread (6), and
- the carcass (2), the belt (7) and the belt bandage (8) each comprise at least one strength member,
**characterized in that**
- the in each case at least one strength member in the belt bandage (8) and in the carcass (2) independently of one another have at least one metallic strength member, and
- the pneumatic vehicle tyre has a load index in the range from 71 to 126.

2. Pneumatic vehicle tyre according to Claim 1, wherein the at least one metallic strength member in the belt bandage (8) has one or more than one metallic monofilament and/or one or more than one metallic cord, preferably in each case made of steel.

3. Pneumatic vehicle tyre according to Claim 1 or 2, wherein the belt bandage (8) has exclusively metallic strength members, preferably exclusively metallic monofilaments and/or metallic cords, particularly preferably in each case exclusively composed of steel.

4. Pneumatic vehicle tyre according to one of Claims 1 to 3, wherein the at least one metallic strength member in the carcass (2) has one or more than one metallic monofilament and/or one or more than one metallic cord, preferably in each case composed of steel.

5. Pneumatic vehicle tyre according to one of Claims 1 to 4, wherein the carcass (2) has exclusively metallic strength members, preferably exclusively metallic monofilaments and/or metallic cords, particularly preferably in each case exclusively composed of steel.

6. Pneumatic vehicle tyre according to one of Claims 1 to 5, wherein the at least one strength member in the belt (7) has at least one metallic strength member, wherein the latter preferably has one or more than one metallic monofilament and/or one or more than one metallic cord, particularly preferably in each case composed of steel.

7. Pneumatic vehicle tyre according to Claim 6, wherein the belt (7) has exclusively metallic strength members, preferably exclusively metallic monofilaments and/or metallic cords, particularly preferably in each case exclusively composed of steel.

8. Pneumatic vehicle tyre according to one of Claims 1 to 7, wherein the at least one metallic strength member in the belt bandage (8) is fully or partially wound and/or laid up, preferably all strength members in the belt bandage (8).

9. Pneumatic vehicle tyre according to one of Claims 1 to 8, wherein the at least one metallic strength member runs in the belt bandage (8) in the circumferential direction at an angle in a range from 0 to 5°, in terms of the exact circumferential direction, preferably from 0 to 4°, particularly preferably from 0 to 3°, most particularly preferably from 0 to 2°.

10. Pneumatic vehicle tyre according to one of Claims 1 to 9, wherein the belt bandage (8) is predominantly free of, preferably does not comprise, textile strength members.

11. Pneumatic vehicle tyre according to one of Claims 1 to 10, wherein the carcass (2) is predominantly free of, preferably does not comprise, textile strength members.

12. Separating method of pneumatic vehicle tyres comprising the steps of
(a) providing a pneumatic vehicle tyre according to one of Claims 1 to 11,
(b) optionally at least partially removing sidewall, shoulder and/or bead regions such that a residual tyre results, and
(c) separating the metallic strength members from the pneumatic vehicle tyre provided according to step (a) or from the residual tyre according to step (b).

13. Method for producing a pneumatic vehicle remould comprising the steps of:
(A) providing a pneumatic vehicle tyre according to one of Claims 1 to 11,
(B) complete or partial separation of the tread, preferably of a worn tread, and
(C) applying a new tread so as to result in the pneumatic vehicle remould.

## Revendications

1. Pneumatique de véhicule pour véhicules de tourisme et/ou véhicules utilitaires légers, comprenant une bande de roulement (6), une carcasse (2), une ceinture (7) constituée d'une, de deux ou trois nappes de ceinture, et un bandage de ceinture (8) constitué d'une ou de plus d'une nappe de bandage de ceinture,
- le bandage de ceinture (8) recouvrant radialement à l'extérieur la ceinture (7) et étant disposé entre la ceinture (7) et la bande de roulement (6), et
- la carcasse (2), la ceinture (7) et le bandage de ceinture (8) comportant chacun au moins un élément de renfort,
**caractérisé en ce que**
- l'au moins un élément de renfort comporte dans le bandage de ceinture (8) et dans la carcasse (2) indépendamment l'un de l'autre au moins un élément de renfort métallique, et
- le pneumatique de véhicule présente un indice de charge dans la plage de 71 à 126.

2. Pneumatique de véhicule selon la revendication 1, l'au moins un élément de renfort métallique dans le bandage de ceinture (8) comportant un ou plus d'un monofilament métallique et/ou un ou plus d'un câblé métallique, de préférence chacun en acier.

3. Pneumatique de véhicule selon la revendication 1 ou 2, le bandage de ceinture (8) comportant exclusivement des éléments de renfort métalliques, de préférence exclusivement des monofilaments métalliques et/ou des câblés métalliques, de manière particulièrement préférée chacun exclusivement en acier.

4. Pneumatique de véhicule selon l'une des revendications 1 à 3, l'au moins un élément de renfort métallique dans la carcasse (2) comportant un ou plus d'un monofilament métallique et/ou un ou plus d'un câblé métallique, de préférence chacun en acier.

5. Pneumatique de véhicule selon l'une des revendications 1 à 4, la carcasse (2) comportant exclusivement des éléments de renfort métalliques, de préférence exclusivement des monofilaments métalliques et/ou des câblés métalliques, de manière particulièrement préférée chacun exclusivement en acier.

6. Pneumatique de véhicule selon l'une des revendications 1 à 5, l'au moins un élément de renfort dans la ceinture (7) comportant au moins un élément de renfort métallique, ce dernier comportant de préférence un ou plus d'un monofilament métallique et/ou un ou plus d'un câblé métallique, de manière particulièrement préférée chacun en acier.

7. Pneumatique de véhicule selon la revendication 6, la ceinture (7) comportant exclusivement des éléments de renfort métalliques, de préférence exclusivement des monofilaments métalliques et/ou des câblés métalliques, de manière particulièrement préférée chacun exclusivement en acier.

8. Pneumatique de véhicule selon l'une des revendications 1 à 7, l'au moins un élément de renfort métallique étant enroulé et/ou posé en totalité ou en partie dans le bandage de ceinture (8), de préférence tous les éléments de renfort dans le bandage de ceinture (8).

9. Pneumatique de véhicule selon l'une des revendications 1 à 8, l'au moins un élément de renfort métallique dans le bandage de ceinture (8) s'étendant dans la direction périphérique selon un angle dans une plage de 0 à 5°, par rapport à la direction périphérique exacte, de préférence de 0 à 4°, de manière particulièrement préférée de 0 à 3°, de manière très particulièrement préférée de 0 à 2°.

10. Pneumatique de véhicule selon l'une des revendications 1 à 9, le bandage de ceinture (8) étant majoritairement dépourvu, de préférence ne comportant pas, d'éléments de renfort textiles.

11. Pneumatique de véhicule selon l'une des revendications 1 à 10, la carcasse (2) étant majoritairement dépourvue, de préférence ne comportant pas, d'éléments de renfort textiles.

12. Procédé de séparation de pneumatique de véhicule comprenant les étapes
(a) fourniture d'un pneumatique de véhicule selon l'une des revendications 1 à 11,
(b) en option retrait au moins partiel des zones de flanc, d'épaulement /ou de bourrelet ce qui donne lieu à un pneu résiduel, et
(c) séparation des éléments de renfort métalliques du pneumatique de véhicule fourni selon l'étape (a) ou du pneu résiduel selon l'étape (b).

13. Procédé de fabrication d'un pneumatique de véhicule reconditionné comprenant les étapes :
(A) fourniture d'un pneumatique de véhicule selon l'une des revendications 1 à 11,
(B) séparation totale ou partielle de la bande de roulement, de préférence d'une bande de roulement usée, et
(C) application d'une nouvelle bande de roulement ce qui donne lieu au pneumatique de véhicule reconditionné.
